# EUROPEAN PATENT APPLICATION

(11) **EP 2 819 326 A1**
(43) Date of publication of application: **31.12.2014**
(21) Application number: 13305869.3
(22) Date of filing: 24.06.2013
(51) Int. Cl.: H04B 10/43

(54) **Optical transceiver for use in low bitrate communication systems**

(71) Applicant: ALCATEL LUCENT, 92100 Boulogne-Billancourt (FR)
(72) Inventor: Poehlmann, Wolfgang, W., 70435 Stuttgart (DE); Deppisch, Bernhard, W., 70435 Stuttgart (DE)
(74) Representative: Wetzel, Emmanuelle

(57) **Abstract**

The present document relates to an optical transceiver (100) comprising:
- a transmitter element (110) adapted to emit a first optical signal (OS1) using a p-n-junction;
- an optical output (120) for transmitting the first optical signal (OS1) emitted by the transmitter element (110) to an optical communication link (130) in a forward direction (FWD);

wherein the transmitter element (110) is adapted to
- receive a second optical signal (OS2) propagating in the optical communication link (130) in a backward direction (BWD) using the same p-n-junction; and
- generate an electrical signal based on the received second optical signal (OS2).

## Description

The present document relates to optical transceivers. In particular, the present document relates to optical transceivers for use in low bitrate communication systems, e.g. to optical (high bitrate) transmitters which may also be used as low bitrate receivers.

Optical transceivers for low bit rates (kbit/sec - Mbit/sec) are widely used. Specifically, optical transceivers for low bit rates are used in demarcation point devices for supervision of optical links. Said demarcation point devices are used as supervision units at demarcation points between network segments. The demarcation point device may be connected to a fiber, wherein a fraction of the transmitted power is tapped by the demarcation point device. The demarcation point device is adapted to detect a low bit rate control signal superimposed to the optical data. In receiving mode, the low bit rate control signal is converted into an electrical control signal which may be analyzed by a microcontroller in order to receive certain information. If required, the transceiver of the demarcation point device may transmit certain information back to a central office. Furthermore, low bit rate optical transceivers may be used in intelligent network devices (e.g. intelligent splitter monitor), sensor networks, smart grids etc..

For transmitting data within upper mentioned networks or systems, half duplex transmission may be used, i.e. the optical transceivers are switched between transmission and receiving mode. Typically, the system or network comprises a central office based device which is adapted to control the switching of the optical transceivers within the system or network between transmission and receiving mode.

Typically, low bit rate optical transceivers are implemented as bidirectional optical sub assemblies (BOSAs) and consist of a housing with an output, wherein in the housing a transmitter element, a receiver element and a separation element are arranged. In transmission mode, an optical signal is emitted by the transmitter element towards the output which is coupled to an optical communication link. In receiving mode, an optical signal is received by the optical transceiver via the optical communication link and directed to the receiver element by means of the separation element. The receiver element is adapted to convert the received optical signal into the electrical domain.

A drawback of the known low bit rate optical transceiver is the complex structure. Especially for low bitrate applications, the optical transceiver is a costly device which is generally oversized with respect to the bandwidth of the transmitting and receiving elements.

Thus, there is a need to provide for an improved optical transceiver with a simple structure which can be manufactured at a favorable price. This need solved by the appended claims. If not explicitly indicated otherwise, embodiments can be freely combined with each other.

According to an aspect, an optical transceiver is described. The optical transceiver comprises a transmitter element which is adapted to emit a first optical signal. The first optical signal may be generated by means of recombination processes using a p-n-junction within the transmitter element. By way of example, the transmitter element may be constituted by a laser, specifically a Fabry-Pérot-Laser (FP-laser) or a distributed feedback laser (DFB-laser), or a luminescence diode (LED), specifically a super-luminescence diode (SLED). Said transmitter elements are adapted to emit an optical signal, specifically a modulated optical signal in a forward biased state of the p-n-junction of the transmitter element.

Furthermore, the optical transceiver comprises an optical output coupled to an optical communication link, wherein the first optical signal emitted by the transmitter element of the optical transceiver is coupled into said optical communication link and therefore propagates in a forward direction. The optical communication link may be implemented as a fiber, e.g. a single mode fiber.

According to an aspect, the transmitter element is adapted to receive a second optical signal propagating in the optical communication link in a backward direction. Thereby, the port constituting the output of the optical transceiver also forms the input of the optical transceiver, at which the second optical signal is received. Furthermore, the transmitter element is adapted to generate an electrical signal based on the received second optical signal. In other words, the transmitter element also acts as receiving element. The conversion from the optical domain into the electrical domain may be realized by generation processes of an electron - hole pairs within a p-n-junction of the transmitter element.

In particular, the same p-n-junction of the transmitter element is alternately used for emitting the first optical signal, in the following referred to as transmission mode, and receiving the second optical signal, in the following referred to as receiving mode. Thereby, the p-n-junction of the transmitter element may be switched between a forward biased state defining the transmission mode and a reverse biased state defining the receiving mode.

In the forward biased state, the electrons are enabled to recombine within the active zone of the transmitter element and thereby generate light of a certain wavelength. In contrary thereto, in the reverse biased state electron-hole pairs are generated by the received second optical signal, i.e. an electrical signal is generated depending on the intensity of the received second optical signal. Thereby, a single p-n-junction of the optical transmitter element may be used for transmitting and receiving optical signals.

Typically, the transmitter element is used in the receiving mode for low bit rate applications. In other words, the bit rate when applying the transmitter element as a receiver is lower than the bit rate when the transmitter element is applied as optical transmitter. This is because the transmitter element is optimized for emitting an optical signal.

According to embodiments, the transmitter element is also optimized for receiving the second optical signal. Typically, state-of-the-art transmitter elements comprise a modulation capability of up to 40 GHz in transmitting mode, wherein the modulation capability when used in the receiving mode is limited to ≈ 10 MHz. In an optical transmission system using at least two of said optical transceivers, the transmission bandwidth is limited by the modulation capability of the transceiver which is operated in the receiving mode. In order to reduce the gap of modulation capabilities in transmitting and receiving mode, the transmitter element may be optimized to increase the modulation capability in receiving mode while a decrease of the modulation capability in transmitting mode may be accepted. Said optimizing may be obtained by adapting the doping of the semiconductor layers of the transmitter element, by adapting the geometries of the semiconductor layers, by choosing appropriate semiconductor materials etc..

The optical transceiver may comprise a control element that is adapted to switch the transmitter element between the transmission mode and the receiving mode. In particular, the control element may be adapted to switch the p-n-junction of the transmitter element in a forward biased state, respectively, in a reverse biased state. In the forward biased state, the p-n-junction of the transmitter element is optically active, i.e. the transmitter element is switched in transmission mode, whereas in the reverse biased state, the transmitter element is switched in receiving mode, i.e. the transmitter element is adapted to generate an electrical signal based on the incoming optical signal.

According to a further aspect, an optical transmission system adapted for bidirectional transmission of optical signals is described. The optical transmission system comprises at least a first optical transceiver and at least a second optical transceiver coupled via an optical communication link. At least one of the optical transceivers of the optical transmission system is formed by an optical transceiver as described above, i.e. at least one optical transceiver comprises a transmitter element which additionally acts as receiving element. Thereby, especially in low bit rate communication environments, a simple and cost-efficient optical transmission system may be obtained.

According to a first embodiment, the first and second optical transceivers of the optical transmission system are constituted by optical transceivers as described above, i.e. comprising transmitter elements which additionally act as receiving elements. Thereby, a symmetric or quasi-symmetric transmission system may be obtained, wherein the transmission bit rate in each direction is limited by the transmitter element which is operated in receiving mode. Thereby, a simple and cost-efficient optical transmission system may be obtained which can be operated at the limited bandwidth of the transmitter element operated in receiving mode.

According to a second embodiment, the first and second optical transceivers of the optical transmission system are constituted by different optical transceivers. For example, the first optical transceiver is constituted by an optical transceiver as described above, i.e. comprising a transmitter element which additionally acts as a receiving element. The at least one further optical transceiver is formed by a state-of-the-art optical transceiver, e.g. a BOSA. Thereby, an asymmetric transmission system with different bandwidth in the forward direction and the backward direction may be obtained. By way of example, the transmission bandwidth in the forward direction may be significantly higher than the transmission bandwidth in the backward direction. Such a system is typically used in communication environments transmitting asymmetric signals, e.g. video signal, wherein in the forward direction the high-bandwidth video signal and in the backward direction a low bandwidth signal, e.g. a control signal are transmitted.

According to embodiments, the first and second optical transceivers are adapted to communicate in half duplex operation mode. Thereby, the first and second optical transceivers are alternately switched between transmission and receiving mode. So, in a first period of time, the first optical transceiver may be operated in transmission mode and the second optical transceiver may be operated in receiving mode, whereas in a second period of time, the first optical transceiver is operated in receiving mode and the second optical transceiver is operated in transmission mode. Thereby, a simply and cost-efficient exchange of information between the first and second optical transceiver using a single optical fiber is obtained.

According to embodiments, a control unit is used for switching the optical transceivers between transmission and receiving mode. In particular, a control unit of the optical transmission system may be adapted to cause the control elements of one or more of the optical transceivers of the optical transmission system to switch the respective transmitter elements between transmission and receiving mode. For this purpose, the control unit may send control signals to the respective optical transceivers. Preferably, the control unit is coupled to each of the optical transceivers in order to alternately switch said optical transceivers between transmission and receiving mode. Furthermore, the control unit may be adapted to cause or to trigger the control elements of said optical transceivers to switch the p-n-junction of the transmitter element of at least one optical transceiver in a forward biased state, respectively, in a reverse biased state. In the forward biased state, the p-n-junction of the transmitter element is optically active, i.e. the transmitter element is switched in transmission mode, whereas in the reverse biased state, the transmitter element is switched in receiving mode, i.e. the transmitter element is adapted to generate an electrical signal based on the incoming optical signal.

According to embodiments, the first optical transceiver is coupled to a plurality of second optical transceivers, wherein the control unit is adapted to control the optical transceivers such that the first optical transceiver alternately communicates with one of the second optical transceivers. Thereby, a simple and cost-efficient communication between a central office, at which the first optical transceiver is located, and a plurality of locations, at which said second optical transceivers are located, may be obtained.

According to another aspect, a method of operating an optical transceiver comprising a transmitter element adapted to emit a first optical signal OS1 using a p-n-junction and an optical output for transmitting the first optical signal OS1 emitted by the transmitter element to an optical communication link in a forward direction FWD is provided. The method comprises operating the p-n-junction of the transmitter element in a forward biased state for emission of the first optical signal OS1, and operating the p-n-junction of the transmitter element in a reverse biased state for receiving a second optical signal OS2 propagating in the optical communication link in a backward direction BWD and generating an electrical signal based on the received second optical signal OS2.

The method may further comprise switching between operating the p-n-junction in the forward biased state and in the reverse biased state based on a control signal. This allows half duplex communication with the transceiver.

It should be noted that the methods and systems including its embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein
Fig. 1 illustrates an optical transceiver according to prior art coupled to an optical communication link;
Fig. 2 shows an optical transceiver according to an embodiment coupled to an optical communication link;
Fig. 3 shows an optical communication system comprising at least one optical transceiver according to Fig. 2; and
Fig. 4 shows an optical communication system with a first optical transceiver communicating with a plurality of second optical transceivers.

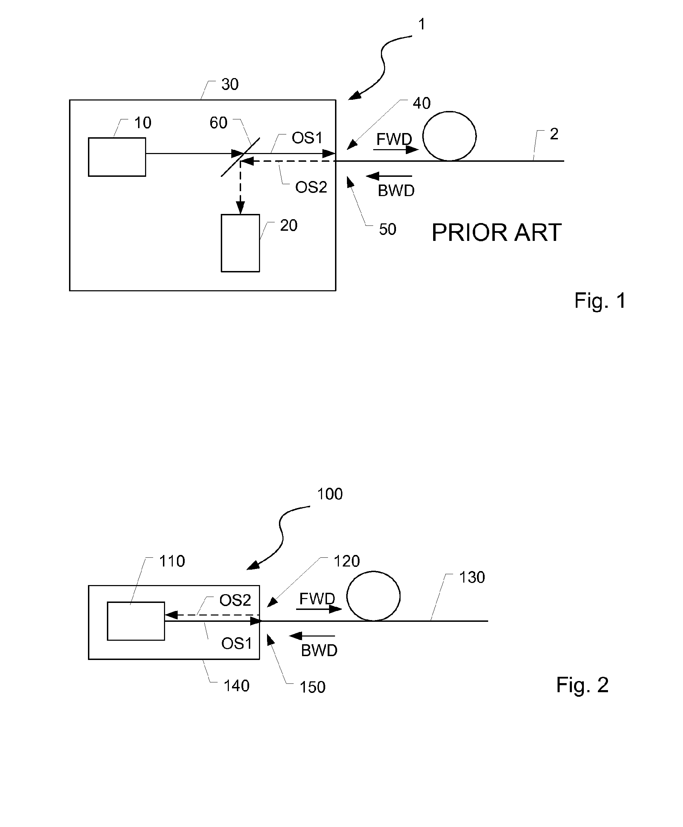

Fig. 1 shows an optical transceiver 1 coupled to an optical communication link 2 according to prior art. The optical communication link 2 may be an optical fiber, specifically a single-mode fiber for transmitting an optical communication signal. The optical transceiver element 1 may be implemented as a BOSA (bidirectional optical sub assembly), i.e. an optical element comprising an optical transmitter element 10 and an optical receiver element 20 integrated in a shared housing 30. The optical transmitter element 10 may be constituted by a laser diode or are light emitting diode (LED) and the optical receiver element 20 may be constituted by a PIN-diode or an avalanche photodiode (APD). Laser diodes or LEDs are typically optimized as transmitter elements, i.e. the transmission power, polarization and modulation capability etc. are configured to the desired field of application. Similarly, PIN-diodes or APDs are optimized receiving elements with respect to their sensitivity, response time etc..

The optical transmitter element 10 is adapted to emit a first optical signal, preferably a modulated optical signal, in a forward direction FWD to an optical output 40 of the optical transceiver 1 coupled with the optical communication link 2. Within the optical communication link 2, a second optical signal may propagate in the backward direction BWD, i.e. in the opposite direction of the first optical signal. Said second optical signal may be received at an optical input 50 of the optical transceiver 1. Said optical input 50 may be constituted by a common port forming the optical input 50 and the optical output 40. In other words, the optical communication link 2 may be formed by a fiber coupled with a single port of the optical transceiver 1, at which the first optical signal propagating in a forward direction FWD is coupled out and the second optical signal propagating in a backward direction FWD is coupled in.

Preferably, the optical transceiver 1 comprises a separation element 60 for separating the first and second optical signals within the optical transceiver 1. Said separation element 60 is adapted to separate the optical signals propagating in different directions and/or having different wavelength. Said separation element may be formed e.g. by a WDM filter or a circulator.

The optical transmitter element 10 and the optical receiver element 20 may be arranged at an angular offset and the separation element 60 is adapted to feed the second optical signal OS2 propagating in the backward direction BWD towards the optical receiver element 20. Thereby, the transceiver 1 is adapted to transmit a first optical signal OS1 via the separation element 60 towards the optical output 40 at which the first optical signal OS1 is coupled into the optical communication link 2. In the backward direction, the second optical signal OS2 propagating within the optical communication link 2 is coupled into the transceiver 1 and directed to the optical receiver element 20.

Fig. 2 shows an optical transceiver 100 according to an embodiment. The optical transceiver 100 comprises a transmitter element 110 which is adapted to emit a first optical signal OS1. The transmitter element 110 may be constituted by laser or a LED. Preferably, the transmitter element 110 is constituted by a Fabry-Pérot-Laser (FP-laser), a distributed feedback laser (DFB-laser) or super-luminescence diode (SLED). The transmitter element 110 comprises a p-n-junction for emitting light in a forward biased state by means of recombination processes. The emitted light may be the first optical signal OS1, preferably a modulated optical signal. The optical transceiver 100 further comprises an optical output 120 which is preferably arranged at a housing 140 of the optical transceiver 100. At the output 120, the first optical signal OS1 is transmitted in a forward direction FWD. An optical communication link 130 is coupled to the output 120 in order to transmit the first optical signal OS1 through the optic communication link 130 in said forward direction FWD.

A second optical signal OS2 emitted by a further transceiver (not shown) located at the opposite side of optical communication link 130 may propagate within the optical communication link 130 in a backward direction BWD, i.e. in the opposite direction of the first optical signal OS1. Said second optical signal OS2 may be received at an optical input 150 of the optical transceiver 100. Said optical input 150 may be formed by a common port constituting the optical output 120 and the optical input 150 of the optical transceiver 100.

The optical transceiver 100 is adapted to receive the second optical signal OS2 by means of the transmitter element 110 and generate an electrical signal based on the received second optical signal OS2. Preferably, the same p-n-junction which is used to emit the first optical signal OS1 by means of a recombination process may be used for generating the electrical signal based on the received second optical signal OS2 by means of an electron-hole pair generation process. In receiving mode, the p-n-junction of the transmitter element 110 may be reverse biased.

The transmitter element 110 may be adapted to be switched between at least two different modes, namely a transmission mode and a receiving mode. Said transmission and receiving mode may be switched according to a certain time schedule, i.e. in a first period of time, the transmitter element 110 is operated in transmission mode and in a second period of time, the transmitter element 110 is operated in receiving mode. In order to effect said switching, the transmitter element 110 is switched between forward biased state (transmission mode) and reverse biased state (receiving mode), controlled by a control element.

In an embodiment, the transmitter element 110 is a usual commercially available optical transmitter element, e.g. a laser or LED, which is typically used for generating a optical signal based on an electrical modulation signal and which is optimized for transmitting said optical signal.

According to an embodiment, the transmitter element 110 is also used as receiver element for receiving a further optical signal received at the transmitter element 110. Preferably, the optical communication link 130 is operated in half duplex mode, i.e. in a first period of time, the transmitter element 110 is operated as transmitter thereby generating an optical signal which is propagating in forward direction FWD through the optical communication link 130, and in a second period of time, the transmitter element 110 is operated as receiver thereby receiving an optical signal which is propagating in backward direction BWD through the optical communication link 130.

Typical transmitter elements optimized for transmission of an optical signal typically have a modulation capability up to 10GHz (SLED < 1GHz, FP-laser < 1GHz, DFB-Laser < 10 GHz). Using said transmitter elements in receiving mode, the modulation capability in receiving mode is limited to lower frequencies. Measurements have shown, that the modulation capability is limited to a maximum modulation capability of ≈10MHz, i.e. the modulation capability in transmission mode is up to three decades higher than in receiving mode.

As a result, using a single transmitter element 110 for transmitting and receiving an optical signal, in a symmetric transmission scheme, the transmission bandwidth is limited by the modulation capability in receiving mode, e.g. limited to a bandwidth <10MHz. Said transmission bandwidth may be sufficient for a plurality of low speed/bit rate applications, e.g. in demarcation point devices for supervising optical links, intelligent network devices, sensor networks for transmitting measurement values, smart grids etc.. Preferably, the optical transceiver 100 of Fig. 2 is used as demarcation point device.

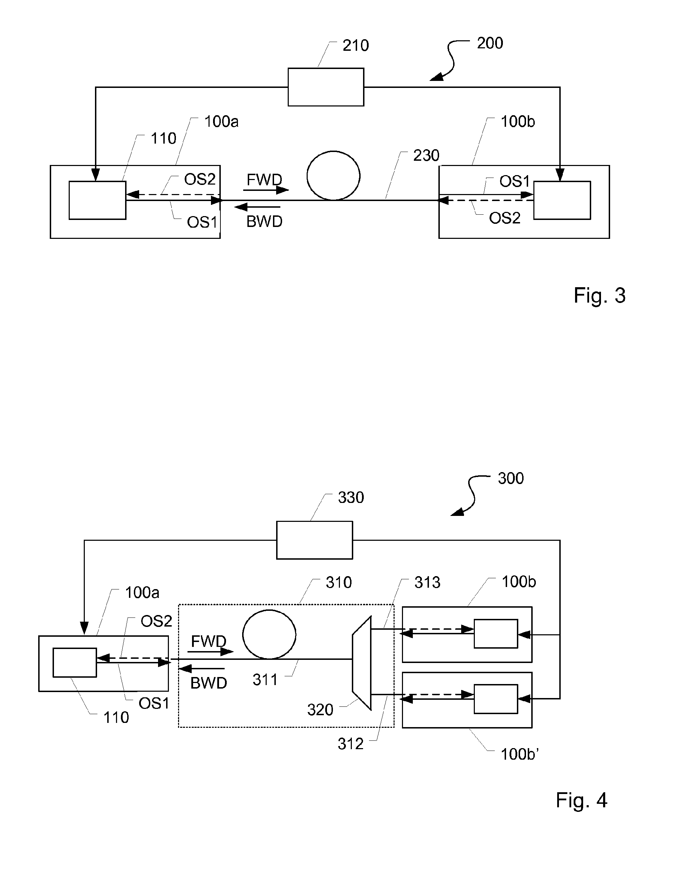

Fig. 3 shows an optical transmission system 200 based on a first optical transceiver 100a and a second optical transmitter 100b coupled by an optical communication link 230. The optical transmission system 200 is adapted to transmit optical signals in bidirectional direction, namely the first optical signal OS1 in forward direction FWD wherein the first optical transceiver 100a operates as transmitter and the second optical transmitter 100b operates as receiver, and the second optical signal OS2 in backward direction BWD wherein the second optical transceiver 100b operates as transmitter and the first optical transmitter 100a operates as receiver.

Because of using the same p-n-junction of the optical transceivers 100a, 100b for transmitting and receiving optical signals, the optical transceivers 100a, 100b have to be time-dependently switched between transmission and receiving mode. For realizing said switching operation, the optical transmission system 200 comprises a control unit 210 coupled to the first and second optical transceivers 100a, 100b. The control unit 210 may be adapted to switch the first and second optical transceivers 100a, 100b between transmission and receiving mode. Preferably, the first and second optical transceivers 100a, 100b are switched between transmission and receiving mode alternately to each other, i.e. when the first optical transceiver 100a is switched in transmission mode, the second optical transceiver 100b is simultaneously switched in receiving mode and vice versa.

Said switching of modes is obtained by applying pre-defined bias voltages at the p-n-junctions of the respective optical transmitter elements 110a, 110b. For operation in the transmission mode, the control unit 210 is configured to operate the p-n-junctions in a forward biased state, i.e. a positive voltage is applied at the p-n-junctions. For operation in the receiving mode, the control unit 210 is configured to operate the p-n-junctions in a reverse biased state, i.e. a negative voltage is applied at the p-n-junctions.

Preferably, the optical communication link 230 is operated in half-duplex. For obtaining a transmission of a signal in the forward direction FWD, the control unit 210 is configured to operate the p-n-junction of the optical transmitter element 110a in transmission mode (forward biased) and the p-n-junction of the optical transmitter element 110b in receiving mode (reverse biased). For obtaining a transmission of a signal in the backward direction BWD, the control unit 210 is configured to operate the p-n-junction of the second optical transmitter element 110b in transmission mode (forward biased) and the p-n-junction of the first optical transmitter element 110a in receiving mode (reverse biased).

According to an embodiment, identical optical transmitter elements 110a, 110b may be use within the optical transceivers 100a, 100b. Thereby a symmetric transmission bitrate for transmitting optical signals in forward direction and backward direction is obtained. As indicated above, the transmission bitrate is limited by the modulation bitrate of the optical transmitter element 110a, 110b operated in receiving mode (e.g. < 10MHz).

According to another embodiment, the optical transmission system 200 may comprise different optical transmitter elements 110a, 110b wherein at least one optical transmitter element 110a, 110b is adapted according to the previously described embodiment of Fig. 2 and wherein the at least one further optical transmitter element 110a, 110b is implemented in a different way, e.g. according to the previously described embodiment of Fig. 1. Thereby an asymmetric transmission bitrate may be obtained wherein only one transmission direction (e.g. backward direction BWD), at which the optical transmitter element 110a, 110b according to embodiment of Fig. 2 is operating in receiving mode is bandwidth-limited, wherein the other transmission direction (e.g. forward direction FWD) may comprise a significantly increased transmission bandwidth.

Said asymmetric transmission may be advantageous in communication environments with asymmetric bandwidth demands, e.g. transmitting a high bandwidth video signal in a first direction and e.g. a control signal with a low bitrate in a second direction.

Fig. 4 shows an optical communication system 300 comprising three optical transceivers 100a, 100b, 100b' coupled via an optical communication network 310. The optical communication network 310 comprises a splitter 320 coupling a first communication link 311 with a plurality of further communication links 312, 313. The first communication link 311is coupled with a first optical transceiver 100a, the communication link 312 is coupled with the second optical transceiver 100b and the communication link 313 is coupled with the third optical transceiver 100b'. Thereby an optical communication system 300 is achieved, in which the optical transceivers 100a, 100b and the optical transceivers 100a, 100b' are able to communicate with each other.

As previously described with respect to Fig. 3, the optical communication system 300 may comprise identical optical transceivers 100a, 100b, 100b' in order to obtain optical transmission with a symmetric bandwidth or may comprise different optical transceivers 100a, 100b, 100b' in order to obtain optical transmission with an asymmetric bandwidth.

The optical communication system 300 comprises a control unit 330 coupled to said optical transceivers 100a, 100b, 100b' and adapted to control the transmission of optical signals between the respective optical transceivers 100a, 100b, 100b'. For example, the control unit 330 may be adapted to obtain an optical signal communication between the optical transceivers 100a, 100b, wherein the optical transceivers 100a is operated as transmitter and the optical transceivers 100b is operated as receiver. Furthermore, the control unit 330 may be adapted to deactivate optical transceivers, e.g. the optical transceiver 100b'.

As previously described with respect to Fig. 3, the control unit 330 may be adapted for applying a pre-defined bias voltage at the p-n-junctions of the optical transmitter elements 110a, 110b, 110b' of the respective optical transceivers 100a, 100b, 100b' thereby obtaining transmission mode, respectively receiving mode.

The optical communication system 300 may be used e.g. for supervising an optical network. Thereby, the optical transceiver 100a may be located at central location, e.g. a central office of a network provider, and the optical transceivers 100b, 100b' may be located at demarcation points within the network. For supervising the optical network, only low bit rates are necessary, e.g. low bitrate control signals < 1MHz.

Further usage of the optical communication system 300 may be in sensor networks, wherein the optical transceiver 100a is also located at the central location and the optical transceivers 100b, 100b' are coupled with senor elements. Thereby, measurement data derived by the sensor elements may be transmitted towards the optical transceiver 100a.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An optical transceiver (100) comprising:
- a transmitter element (110) adapted to emit a first optical signal (OS1) using a p-n-junction;
- an optical output (120) for transmitting the first optical signal (OS1) emitted by the transmitter element (110) to an optical communication link (130) in a forward direction (FWD);
wherein the transmitter element (110) is adapted to
- receive a second optical signal (OS2) propagating in the optical communication link (130) in a backward direction (BWD) using the same p-n-junction; and
- generate an electrical signal based on the received second optical signal (OS2); and
wherein the optical transceiver (100) further comprises a control element adapted to alternately switch the transmitter element (110) between transmission mode and receiving mode by controlling a bias voltage of the p-n-junction of the transmitter element (110).

2. The optical transceiver of claim 1, wherein the transmitter element (110) comprises a laser or a light emitting diode (LED).

3. The optical transceiver of any previous claim, wherein the transmitter element (110) is optimized for receiving the second optical signal (OS2).

4. An optical transmission system (200) adapted for bidirectional transmission of optical signals, the optical transmission system (200) comprising at least a first optical transceiver (100a) and at least a second optical transceiver (100b) coupled via an optical communication link (230), wherein at least one of the optical transceivers (100a, 100b) is constituted according to any of claims 1 - 3.

5. The optical transmission system according to claim 4, wherein the first and second optical transceivers (100a, 100b) are according to any of claims 1 - 3 in order to obtain a symmetric or quasi-symmetric transmission with respect to the bit rate.

6. The optical transmission system according to claim 4, wherein only the first or the second optical transceivers (100a, 100b) is constituted according to any of claims 1 - 3 in order to obtain an asymmetric transmission with respect to the bit rate.

7. The optical transmission system according to any of claims 4 - 6 wherein the first and the second optical transceivers (100a, 100b) are adapted to communicate in half duplex operation mode.

8. The optical transmission system according to any of claims 4 - 7 comprising a control unit (210) adapted to cause the control element of the at least one of the optical transceivers (100a, 100b), which is constituted according to any of claims 1 - 3, to switch the transmitter element (110) between the transmission mode and the receiving mode.

9. The optical transmission system according to claim 8, wherein the control unit (210) is adapted to cause the control element to switch the p-n-junction of the transmitter element (110) in a forward biased state for realizing the transmission mode and in a reverse biased state for realizing the receiving mode.

10. The optical transmission system according to claims 8 or 9 referring back to claim 5, wherein the control unit (210) is adapted to cause the control element to switch the transmitter elements (110) of the first and second optical transceivers (100a, 100b) in transmission mode and receiving mode alternately to each other.

11. The optical transmission system according to any of claims 8 - 10, wherein the first optical transceiver (100a) is coupled to a plurality of second optical transceivers (100b, 100b'), wherein the control unit (210) is adapted to control the first optical transceiver (100a) and the plurality of second optical transceivers (100b, 100b') such that the first optical transceiver (100a) alternately communicates with one of the plurality of second optical transceivers (100b, 100b').

12. A method of operating an optical transceiver (100) comprising a transmitter element (110) adapted to emit a first optical signal (OS1) using a p-n-junction and an optical output (120) for transmitting the first optical signal (OS1) emitted by the transmitter element (110) to an optical communication link (130) in a forward direction (FWD), the method comprising:
• operating the p-n-junction of the transmitter element (110) in a forward biased state for emission of the first optical signal (OS1), and
• operating the p-n-junction of the transmitter element (110) in a reverse biased state for receiving a second optical signal (OS2) propagating in the optical communication link (130) in a backward direction (BWD) and generating an electrical signal based on the received second optical signal (OS2).
